(19) Europäisches Patentamt European Patent Office Office européen des brevets

(11) **EP 4 579 603 B1**

(12) **EUROPEAN PATENT SPECIFICATION**

(45) Date of publication and mention of the grant of the patent:
**03.06.2026 Bulletin 2026/23**

(21) Application number: **23383386.2**

(22) Date of filing: **27.12.2023**

(51) International Patent Classification (IPC):
$G06V\ 10/12^{(2022.01)}$    $G06V\ 10/10^{(2022.01)}$
$G06V\ 10/26^{(2022.01)}$    $G06V\ 10/74^{(2022.01)}$
$G06V\ 20/64^{(2022.01)}$    $G06T\ 7/73^{(2017.01)}$

(52) Cooperative Patent Classification (CPC):
**G06V 20/647; G06T 7/001; G06V 10/12;
G06V 10/16; G06V 10/26; G06V 10/761;**
G06T 2207/30164

(54) **DEVICE AND METHOD FOR CLASSIFYING PARTS**

VORRICHTUNG UND VERFAHREN ZUM KLASSIFIZIEREN VON TEILEN

DISPOSITIF ET PROCÉDÉ DE CLASSIFICATION DE PIÈCES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**02.07.2025 Bulletin 2025/27**

(73) Proprietor: **Instituto Tecnológico De Informática**
**46980 Paterna, Valencia (ES)**

(72) Inventors:
• **PÉREZ SOLER, Javier**
**E-46980 Paterna, Valencia (ES)**
• **PÉREZ CORTÉS, Juan Carlos**
**E-46011 Valencia (ES)**
• **GUARDIOLA GARCÍA, José Luis**
**E-46021 Valencia (ES)**

(74) Representative: **ABG Intellectual Property Law,
S.L.**
**Avenida de Burgos, 16D**
**Edificio Euromor**
**28036 Madrid (ES)**

(56) References cited:
**US-A1- 2021 334 948**    **US-A1- 2022 335 643**

• **CARVALHO L E ET AL: "3D object recognition
and classification: a systematic literature
review", PATTERN ANALYSIS AND
APPLICATIONS, SPRINGER, NEW YORK, NY, US,
vol. 22, no. 4, 27 February 2019 (2019-02-27),
pages 1243 - 1292, XP036890652, ISSN:
1433-7541, [retrieved on 20190227], DOI: 10.1007/
S10044-019-00804-4**

## Description

## OBJECT OF THE INVENTION

The present invention relates to a device for classifying parts in accordance with a specific part model with a known three-dimensional shape. The present invention also relates to a method for carrying out such classification. As a result of the classification, the device and the method are capable of determining whether a specific part corresponds to one of the models taken as a reference.

More particularly, the invention is characterized by the capacity to classify a part by means of cameras which capture images of said part without the part having to adopt a specific position. Therefore, the device and the method of the invention use these cameras to acquire images of the part from different points of view and a processor in charge of analyzing said images to classify the part among several part models with a known three-dimensional shape.

## BACKGROUND OF THE INVENTION

Classification of parts based on an image taken by a camera in accordance with different part models with a known shape is not sufficient when the parts are very similar to one another morphologically or when the part belongs to a set in which a single view is never capable of differentiating between the different parts of said set; for example, a part comprising a plurality of faces with one and the same drawing on each face, but with the drawing exhibiting a different distribution on each of said faces.

On one hand, due to the nature of the part to be captured by the camera and to lighting conditions, it is possible that the only information available for classification is the contour. This contour information is often insufficient to distinguish between two or more parts, particularly when the parts exhibit significant morphological similarity. In such cases, when the parts are in a certain position, the contours thereof captured by the camera may be substantially the same and, therefore, the classification of the parts may not be very precise.

Other morphological or appearance characteristics of the parts could be used for classification, but it is not always possible to use them. For example, the texture of the part may be contaminated, so classification based on this characteristic would not have the required accuracy either. Similarly, shadows and reflections on the parts can help to estimate the geometry or three-dimensional shape of the parts, but said shadows and reflections can be highly attenuated, for example when using polarized light, precisely due to the behavior of the polarized light when it strikes and is reflected on a surface, so classification based on this characteristic would not have a high accuracy in this context either.

There is therefore a need for a device and a method that can classify parts in accordance with different reference part models with high accuracy, even when the parts exhibit significant morphological similarity to one another and the lighting conditions do not necessarily provide information about the geometry or three-dimensional shape of the part.

A relevant prior art document is: US 2021/334948 A1 (PÉREZ SOLER JAVIER [ES] ET AL) 28 October 2021 (2021-10-28).

## DESCRIPTION OF THE INVENTION

The present invention proposes a solution to the preceding problems by means of a device for classifying parts according to claim 1 and a method for classifying parts according to claim 15. The dependent claims define preferred embodiments of the invention.

In a first inventive aspect, the invention provides a device for classifying parts, comprising:

- a plurality of cameras $C_j$, $j = 1, ...,n,$ with $n$ being the number of cameras, for capturing images, each of the cameras $C_j$ being configured to capture the part to be classified; wherein the n cameras are distributed in space with a different position and orientation,
- a processor configured to receive the images captured by the plurality of cameras $C_j$ and to process them;

wherein the processor is further configured to carry out the following steps:

    a) activating the plurality of cameras with each camera $C_j$ capturing an image of the part to be classified;
    b) segmenting the images in order to distinguish, in each image, the captured part to be classified from the background;
    c) defining a characteristic function $f(t),$ with $t$ being a scalar parameter, of the captured part for each of the segmented images;
    d) comparing, for each segmented image, the characteristic function $f(t)$ with a plurality of predefined reference characteristic functions $f_m(t)$ of a representative model of the part to be classified, determining a degree of proximity with each of such characteristic functions $f_m(t);$

wherein the reference characteristic functions $f_m(t)$ are predefined according to the following steps:

    i. providing the representative model of the part to be classified;
    ii. selecting a set of orientation angles of the model;
    iii. discretizing a domain formed by all the possible values of the angles selected in the preceding step and, for each point of the discretized domain, orienting the part of the model according to the discrete values of the angles corresponding to that point of the domain;

iv. generating an image of the model for each orientation established in the preceding step, the image being in accordance with the position and orientation of a camera $C_j$ considered as a reference camera, and executing, for each orientation, steps b) and c) to obtain the characteristic function $f_m(t)$;

and wherein the processor is further configured to:

e) generate, for each camera $C_j$, $j = 1, ..., n$, a scalar function $g_j$ dependent on at least the angles selected in step ii), the scalar function $g_j$ being defined as the degree of proximity between the characteristic function $f_j(t)$ of the part captured by the camera $C_j$ and the plurality of reference characteristic functions $f_m(t)$, the scalar function $g_j$ being determined in the predefined domain for each angle of the selected angles;

f) take one of the scalar functions $g_i$, the one associated with a predetermined reference camera $C_i$, as a reference, and rotating the remaining scalar functions $g_j$, $i \neq j$, according to the orientation difference between the reference camera $C_i$ and the camera $C_j$ so that all the scalar functions are representing the degree of proximity with respect to one and the same angle reference;

g) merge the n scalar functions $g_j$ into a single scalar function $g_a$ by means of a pre-established merging criterion;

h) repeat steps d)-g) for a plurality of representative models of the part to be classified obtaining a plurality of scalar functions $g_a$;

i) select the model the scalar function $g_a$ of which exhibits the minimum degree of proximity from among all the degrees of proximity of the plurality of scalar functions $g_a$; and

j) classify the part as corresponding to the model selected in the preceding step.

The device of the invention seeks to classify a part in accordance with a part model with a known geometry or shape, distinguishing the shape of the model from several different part models. That is, as a result of the classification, the method and the device carrying out the method establish which reference model has the shape closest to the shape of the part to be classified.

Throughout the document, a part shall be understood as an object or a portion of an object. Throughout the document, "part of the model" or simply "model" shall be understood as synonyms.

The device comprises a plurality of cameras $C_j$ for capturing images of the part to be classified. Said cameras $C_j$ are distributed in space with different positions and orientations, so that the part can be seen from different points of view in each of the images. Preferably, each of the cameras $C_j$ has a field of view comprising a region common for all the cameras, this common region being where the part is located at the time of capturing the image.

The device further comprises a processor which activates the cameras $C_j$ and receives and processes the images to extract the information required for classifying the parts.

First, the processor performs a segmentation of the part with respect to the background. Throughout the document, segmentation shall be understood as a computing operation in which two or more regions in a digital image are distinguished. In particular, the processor segments the image to distinguish the part from the background. As a result of segmentation, at least the boundary between the region of the image showing the part and the region of the image corresponding to the background is defined.

For each of the segmented images, the processor defines a characteristic function $f(t)$ of the captured part. This characteristic function $f(t)$ defines a particular characteristic of the captured part, for example, the contour or the texture. In these cases, the characteristic function $f(t)$ is dependent on the contour or on the texture of the part.

The device has stored internally a plurality of reference characteristic functions $f_m(t)$. Said functions define a particular characteristic of the parts with a known shape which are represented by the different models; for example, the contours or the textures of said parts. In these cases, the reference characteristic functions $f_m(t)$ are dependent on the contour or on the texture of these parts of the models.

Therefore, in an operating mode, the processor determines a characteristic function $f(t)$ of the part to be classified which can be calculated according to how such characteristic function is defined. This same operation of determining the characteristic function, and with the same definition, is applied to the plurality of parts of the models in order to obtain the plurality of reference characteristic functions $f_m(t)$.

When expressions such as "parts of models" or simply "models" are used, these expressions can be interpreted to mean that they can be either physical parts which can be captured by means of a camera, giving rise to an image, or virtual models on which it is also possible to generate an image through simulation by placing a virtual camera with the same intrinsic and extrinsic parameters as the actual camera of the device in the same position and orientation with which the image would be taken when the part is real.

The processor has previously generated each of this plurality of reference characteristic functions $f_m(t)$ following the subsequent steps:

i. providing a representative model of the part;
ii. selecting a set of orientation angles of the model;
iii. discretizing a domain formed by all the possible values of the angles selected in the preceding step and, for each point of the discretized domain, orienting the part of the model according to the discrete values of the angles corresponding to that point of the domain;

iv. generating an image of the model for each orientation established in the preceding step, the image being in accordance with the position and orientation of a camera $C_i$ considered as a reference camera;

v. segmenting the generated images to distinguish the part represented by the model from the background; and

vi. defining the reference characteristic function $f_m(t)$ for the part represented by the model.

That is, for each of the images, there is provided a reference characteristic function $f_m(t)$ which is processed as a parametrized signal in a variable.

The processor is further configured to receive the signals defined based on the characteristic functions $f(t)$ of the segmented images of the parts to be classified. The processor compares said signals with the plurality of signals represented by means of the reference characteristic functions $f_m(t)$. This comparison allows determining a degree of proximity between the signals; that is, the processor estimates how similar are the characteristics of the part to be classified and the characteristics of the parts with a known shape which are represented by the different models.

The signals processed by the processor in the form of functions $f(t)$ and $f_m(t)$, respectively, are compared under a specific pre-established closeness criterion. This closeness criterion is not unique. For example, predefining a scalar product and its associated norm is sufficient. The norm of the difference between $f(t)$ and $f_m(t)$ is an example of the distance measurement between both functions.

In the context of the invention, the greater the similarity between the characteristics of the part to be classified and the characteristics of the parts of the models, the smaller the degree of proximity is in terms of measurement. Therefore, if the degree of proximity is zero, it means that the characteristic functions that are being compared are the same and, therefore, the morphologies of the parts being compared are substantially the same.

Based on the degrees of proximity determined, the processor generates a scalar function $g_j$ which depends on the angles selected by the processor to generate the reference characteristic functions $f_m(t)$ (step ii). Therefore, the scalar function $g_j$ represents the degree of proximity between the characteristic function $f_j(t)$ of the part captured by the camera $C_j$ and the plurality of reference characteristic functions $f_m(t)$. When the comparison is made with a plurality of reference characteristic functions $f_m(t)$, it is understood that the distance is measured with each of the reference characteristic functions.

Once the scalar functions $g_j$ have been obtained for all the images acquired by the cameras, the processor merges all the collected information such that the classification is based on said merging of information.

The merging process is as described below. First, the processor selects one of the scalar functions $g_i$, the one associated with the reference camera $C_i$, as a reference, and performs a rotation of the remaining scalar functions. Said rotation depends on the orientation difference between the reference camera $C_i$ and the camera to which the scalar function to be rotated would correspond. The purpose of these rotations of reference functions is so that all of them represent the degree of proximity with respect to one and the same angle reference.

Rotation of a scalar function $g_j$ should be interpreted in the following manner. A scalar function $g_j$ has a domain, wherein each independent variable on said domain corresponds to a different angle, for example the angle of rotation with respect to a coordinate axis. The range of each angle is different according to the orientation of the camera. The change in orientation which allows expressing the scalar function $g_j$ in the "rotated" domain consists of establishing a correspondence, such that the function, for each angle of the domain after the rotation or change in orientation, takes the value of the function before the rotation but acquired in another location of the domain, i.e., in the location of the domain before rotation where the angles taken as an argument are the same.

In one embodiment, the device has stored therein the orientations of the cameras as a result of a prior calibration process.

The processor then merges the scalar functions into a single scalar function $g_a$. Each value of the merged scalar function is achieved following a particular pre-established merging criterion; for example, by selecting the maximum value or the mean of the values of the scalar functions to be merged.

Once the scalar function $g_a$ has been obtained, the processor repeats steps d)-g) for each of the available part models, therefore obtaining a plurality of scalar functions $g_a$.

Finally, the processor classifies the part in accordance with the model the scalar function $g_a$ of which exhibits the minimum degree of proximity from among all the degrees of proximity of the plurality of scalar functions $g_a$.

Advantageously, the processor merges all the information available for the classification obtained from the different points of view, such that classification accuracy is maximized.

In one embodiment, the processor is further configured to determine the set of angles which determine the minimum of the scalar function $g_a$ of the selected model such that the orientation for which the scalar function is minimum is the orientation of the part.

Determination of the minimum of the scalar function $g_a$ is expected to occur in a location of the domain where the comparison with a model renders the minimum distance and this will occur when the model is the most similar, but also has the orientation closest to the part capturing orientation. Hence, the search for minimum must be performed in the entire domain of the scalar function $g_a$.

Therefore, advantageously, the device of the invention not only classifies the part in accordance with a predetermined model, but also estimates the orientation of the part with respect to the actual capturing device.

In one embodiment, if the smallest degree of proximity is greater than a pre-established threshold value, then it is considered that the part to be classified does not correspond to any model, given that there is no model and orientation of said model considered to have a close correspondence with the part captured with any of the cameras.

Therefore, to prevent parts with an unknown morphology from being able to be classified in accordance with the predetermined reference models representing parts with known shapes, the device of the invention contemplates the option of imposing a threshold value above which the part would be considered as not being similar enough to the parts which are represented by the models.

In one embodiment, step c) of defining the characteristic function $f(t)$ and/or the reference characteristic functions $f_m(t)$ comprises the following sub-steps:

c.1) establishing a closed path which delimits the contour of the part in each of the segmented images;
c.2) determining a characteristic point of the closed path, preferably the centroid of the inner area of the closed path;
c.3) selecting an initial point of the closed path;
c.4) parametrizing the closed path based on the selected initial point; and
c.5) defining the characteristic function $f(t)$ or the reference characteristic function $f_m(t)$ as the function which represents, for each parametrized point $t$ of the closed path, the distance between point $t$ and the characteristic point.

In this embodiment, the characteristic function $f(t)$ or the reference characteristic functions $f_m(t)$ are determined based on the contour of the segmented part in the image in order to determine the boundary curve (of the part or of the part represented by the model). In particular, the contour of the part is coded as a one-dimensional signal using the distance to a point inside the closed path, preferably the centroid or geometrical center of the inner area of the closed path. This signal is preferably processed in a discrete manner by taking samples at regular intervals of the closed path.

In one embodiment, step c) of defining the characteristic function $f(t)$ and/or the reference characteristic functions $f_m(t)$ is performed by means of a neural network trained to extract information about textures, shadows, reflections or other sources of information about the segmented part in the image and wherein $f(t)$ and/or $f_m(t)$ is at least one output of the neural network.

Alternative to the use of the contour, other characteristics of the part and/or of the parts which are represented by the models can be used to generate the characteristic function $f(t)$ and/or the reference characteristic functions $f_m(t)$; for example, the texture, shadows, and reflections.

The processor generates such functions using a neural network, wherein one of the outputs of said neural network is the characteristic function $f(t)$ and/or one of the reference characteristic functions $f_m(t)$.

In one embodiment, the degree of proximity resulting from the comparison between two characteristic functions $(f(t), f_m(t + \varphi))$, wherein $\varphi$ is an offset value, is determined as the minimum distance between both functions, with $\varphi$ taking any offset value $\varphi$.

Due to the nature of the definition of the characteristic function $f(t)$ based on its contour, this function is periodic. This gives rise to the fact that a subsequent search on the degree of similarity between two periodic functions for any value among the possible angles makes the comparison invariable with respect to the initial point in the boundary curve that defines the contour for defining the characteristic function $f(t)$.

In one embodiment, the distance between two functions is determined as the norm of the difference of the two functions, for a pre-established norm.

In these embodiments, the degree of proximity is estimated by calculating the minimum distance between the characteristic function $f(t)$ and each of the reference characteristic functions $f_m(t)$ or calculating the norm of the difference between said functions.

In other embodiments, other metrics for estimating the degree of proximity or similarity between functions are valid in the context of the invention.

In one embodiment, the selected angles are two angles different from one another and different from the angle of rotation about the optical axis of the camera.

This specific angle selection allow the results to be invariable with respect to the angle of rotation about the optical axis of the camera, and therefore enable operation with two-dimensional domains instead of three-dimensional domains, resulting in a lower computing cost.

In one embodiment, the representative model of the shape of the part is:

- either a numerical model and step iv), in which an image of the model is generated for each established orientation, is performed by means of rendering the numerical model oriented according to the established orientation,
- or a physical part and step iv), in which an image of the model is generated for each established orientation, is performed by capturing an image by means of a camera, wherein the part has an orientation with respect to the camera according to the established orientation.

Each of the models representing parts with a known geometry or shape can be generated in a simulated manner by means of a numerical model or in a real manner by using physical parts.

Said models require the generation of a plurality of images of the part that they represent. In the case of using a numerical model, the images are generated by means of rendering said numerical model oriented according to the required orientation by simulating a scenario in which the model is located and the camera has the same intrinsic and extrinsic parameters as the real camera. In contrast, if real physical parts are used, the images are captured by means of a camera by orienting the real part with respect to the camera according to the required orientation.

In one embodiment, the processor is configured to rotate, in step f), the scalar functions $g_j$ by applying a transformation matrix on each of said scalar functions $g_j$, wherein each transformation matrix is defined by the positions and orientations of the reference camera $C_i$ and of the camera $C_j$.

The rotation of the scalar functions $g_j$ prior to the merging thereof is performed in accordance with a transformation matrix. The processor defines this matrix based on the known positions and orientations of the reference camera $C_i$ and of the camera $C_j$ (that is, the camera corresponding to the scalar function to be rotated).

In one embodiment, the device has stored therein the positions and orientations of the cameras as a result of a prior calibration process.

In one embodiment, if only the transformation matrix is used to rotate the scalar functions, it is assumed that the center of the part is located in the center of the captured image.

In one embodiment, the processor is configured to apply, in step f), a shift on each scalar function $g_j$ before or after applying the transformation matrix.

Given a scalar function $g_j$ before the transformation, the transformation provides the value of $g_j$ depending on the angles of the domain thereof, such that they verify that they are the values of the function sought at the same angles in the domain before being transformed or rotated.

In this embodiment, the center of the part is not located in the center of the captured image. Therefore, it is necessary to additionally apply this shift to the rotation matrix in order to enable performing the rotation of the scalar functions.

In one embodiment, the n cameras are distributed in a spherical geometric location such that the optical axes of all the cameras are oriented towards an inner region of the sphere, the inner region being configured to house therein the part to be classified and preferably comprising the center of the sphere.

In this embodiment, the cameras are distributed in a closed surface in the form of a sphere, oriented towards an inner region thereof, in which the part to be classified will be housed. This geometric distribution is advantageous to enable viewing the part from different points of view, such that the probabilities of correctly classifying the part into its corresponding model are maximized.

In a particular embodiment, the inner region of the sphere comprises the center of the sphere.

In one embodiment, the n cameras are distributed in a geometric location in the form of a barrel such that the optical axes of all the cameras are oriented towards an inner region of the barrel, the inner region of the barrel being configured to house therein the part to be classified.

In this embodiment, the cameras are distributed in a closed surface in the form of a barrel, oriented towards an inner region thereof, in which the part to be classified will be housed. This geometric distribution is advantageous to enable viewing the part from different points of view, such that the probabilities of correctly classifying the part into its corresponding model are maximized.

Throughout the description, surface in the form of a barrel will be understood to mean a closed surface in the form of a cylinder with two upper and lower bases having an outwards bulge in the central area thereof.

In a particular embodiment, the inner region of the barrel at least partially comprises an axis of the barrel, the axis of the barrel connecting the centers of the upper and lower bases thereof.

Advantageously, since the cameras of the device are distributed in a surface in the form of a barrel, said cameras can point to different points of the axis of the barrel to capture the part during its movement (for example, up-down or down-up on the axis). It is understood that the path of the part essentially follows the axis of the barrel, so it is located in the capture region of a camera at one time or another. The part is thereby always captured on the axis, in a capture location of the camera that has at least that location on the axis in focus, and at the same distance with maximum resolution. That is, even if there are cameras oriented towards different points on the axis, if the part passes through the axis, then at different instants of time the same distance and focus conditions are present in different cameras.

In one embodiment, the merging criterion is one selected from the following list:

- for each value of the domain of the scalar function, the merged value is the maximum value of all the scalar functions $g_j$, $j = 1, \ldots, n$;
- for each value of the domain of the scalar function, the merged value is the sum of the values of each of the scalar functions $g_j$, $j = 1, \ldots, n$;
- for each value of the domain of the scalar function, the merged value is the value of the norm of the set of n values of the scalar functions $g_j$, $j = 1, \ldots, n$.

In this embodiment, different merging criteria are set forth without prejudice to the fact that other different merging criteria are possible in the context of the invention.

In one embodiment, the device further comprises means for placing the part to be classified in the inner region by means of either free fall or a launch.

In this embodiment, Zero Gravity 3D, ZG3D, technology based on a system in which the part falls through the capture space of the cameras so that there is no securing or support element of any type that conceals any portion of the part, is used. This technology is described in patent EP2511653.

Alternatively, the part can be positioned in the capture space of the cameras by using a launcher which likewise allows analyzing the part without of any type of concealment. This technology is described in patent EP3418675.

In this embodiment, the part is placed at different points of the area of interest by moving up-down (if the means for placing the part operate by free fall, like in ZG3D technology explained above) or down-up (if the means for placing the part use a launcher).

With any of these two configurations, the device has the advantage of the part being inspected in its entirety without any of its portions being concealed. The entire part therefore appears in the captured images, without concealment, which maximizes the possibilities of correctly classifying it into its corresponding model.

In other embodiments, the positioning of the part in the capture space of the camera(s) could be performed using any other means.

In a second inventive aspect, the invention provides a method for classifying parts carried out by the device of the first inventive aspect, wherein the method comprises the processor of the device executing the following steps

1) activating the plurality of cameras with each camera $C_j$ capturing an image of the part to be classified;

2) segmenting the images in order to distinguish, in each image, the captured part to be classified from the background;

3) defining a characteristic function $f(t)$, with $t$ being a scalar parameter, of the captured part for each of the segmented images;

4) comparing, for each segmented image, the characteristic function $f(t)$ with a plurality of predefined reference characteristic functions $f_m(t)$ of a representative model of the part to be classified, determining a degree of proximity with each of such characteristic functions $f_m(t)$;

wherein the reference characteristic functions $f_m(t)$ are predefined according to the following steps carried out by the processor:

i. providing the representative model of the part to be classified;

ii. selecting a set of orientation angles of the model;

iii. discretizing a domain formed by all the possible values of the angles selected in the preceding step and, for each point of the discretized domain, orienting the part of the model according to the discrete values of the angles corresponding to that point of the domain;

iv. generating an image of the model for each orientation established in the preceding step, the image being in accordance with the position and orientation of a camera $C_i$ considered as a reference camera, and executing, for each orientation, steps 2) and 3) to obtain the characteristic function $f_m(t)$;

5) generating, for each camera $C_j$, $j = 1, ..., n$, a scalar function $g_j$ dependent on at least the angles selected in step ii), the scalar function $g_j$ being defined as the degree of proximity between the characteristic function $f_j(t)$ of the part captured by the camera $C_j$ and the plurality of reference characteristic functions $f_m(t)$, the scalar function $g_j$ being determined in the predefined domain for each angle of the selected angles;

6) taking one of the scalar functions $g_i$, the one associated with a predetermined reference camera $C_i$, as a reference, and rotating the remaining scalar functions $g_j$, $i \neq j$, according to the orientation difference between the reference camera $C_i$ and the camera $C_j$ so that all the scalar functions are representing the degree of proximity with respect to one and the same angle reference;

7) merging the $n$ scalar functions $g_j$ into a single scalar function $g_a$ by means of a pre-established merging criterion;

8) repeating steps 4)-7) for a plurality of representative models of the part to be classified obtaining a plurality of scalar functions $g_a$;

9) selecting the model the scalar function $g_a$ of which exhibits the minimum degree of proximity from among all the degrees of proximity of the plurality of scalar functions $g_a$; and

10) classifying the part as corresponding to the model selected in the preceding step.

**DESCRIPTION OF THE DRAWINGS**

These and other features and advantages of the invention will become more apparent from the following detailed description of a preferred embodiment, given solely by way of illustrative and non-limiting example in reference to the attached figures.

Figures 1a-1b show the device of the invention according to one embodiment.

Figure 2 shows an example of the steps carried out by the processor of the device of the invention to obtain the characteristic functions $f(t)$ of a part to be classified.

Figure 3 shows an example of the steps carried out by the processor of the device of the invention to obtain the reference characteristic functions $f_m(t)$ of two reference models.

Figure 4a-4b show an example of the comparison of the characteristic functions $f(t)$ of the part to be classified and the reference characteristic functions $f_m(t)$ of the models carried out by the processor of the device.

Figure 5 shows an example of a two-dimensional scalar function $g_j$.

## DETAILED DESCRIPTION OF THE INVENTION

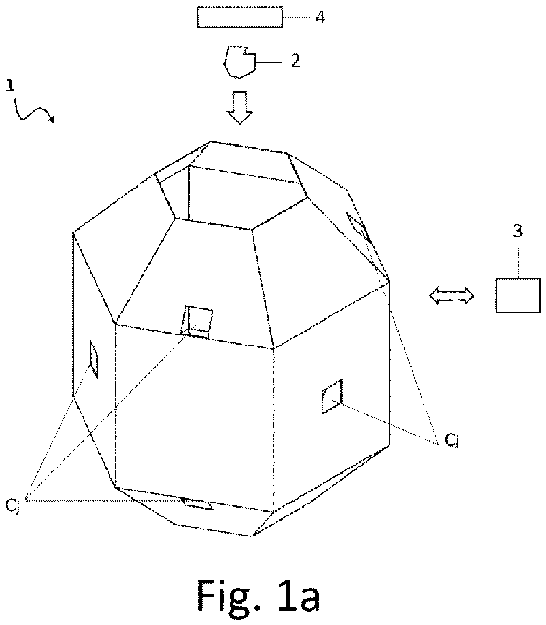

Figures 1a-1b shows a device (1) for classifying parts (2), comprising:

- a plurality of cameras $C_j$, $j = 1, \ldots, n$, with $n$ being the number of cameras, for capturing images, each of the cameras $C_j$ being configured to capture the part (2) to be classified; wherein the n cameras are distributed in space with a different position and orientation, and
- a processor (3) configured to receive the images captured by the plurality of cameras $C_j$ and to process them;

wherein the processor (3) is configured to carry out steps a)-j) described above and to generate the characteristic functions $f(t)$ and the reference characteristic functions $f_m(t)$ according to steps i)-iv) described in detail above.

In Figure 1a, the n cameras are distributed in a geometric location in the form of a barrel such that the optical axes of all the cameras are oriented towards an inner region of the barrel, the inner region of the barrel being configured to house therein the part (2) to be classified and preferably at least partially comprising an axis of the barrel, the axis of the barrel connecting the centers of the upper and lower bases thereof.

Furthermore, Figure 1a shows means (4) for placing the part (2) to be classified in the inner region by free fall. These means (4) for placing the part are optional.

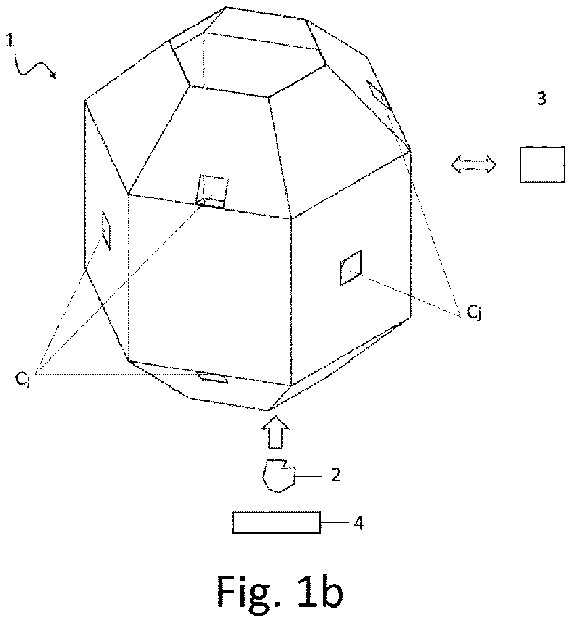

Figure 1b shows the same device as that of Figure 1a, with the exception that the means (4) place the part (2) to be classified in the inner region by means of launching. These means (4) for placing the part are optional.

In another embodiment that is not shown, the n cameras are distributed in a spherical geometric location such that the optical axes of all the cameras are oriented towards an inner region of the sphere, the inner region being configured to house therein the part (2) to be classified and preferably comprising the center of the sphere. Although the outer casing adopts a polygonal shape, the points where the cameras are located are equidistant with respect to a common central point, and the cameras are therefore located in a spherical geometric location.

In one embodiment, for any of the devices (1) shown in Figures 1a-1b, each model in accordance with which the part (2) can be classified is:

- either a numerical model and step iv), in which an image of the model is generated for each established orientation, is performed by means of rendering the numerical model oriented according to the established orientation,
- or a physical part (2) and step iv), in which an image of the model is generated for each established orientation, is performed by capturing an image by means of a camera, wherein the part (2) has an orientation with respect to the camera according to the established orientation.

The devices (1) shown in Figures 1a-1b are further configured to execute a method for classifying parts (2), wherein the method comprises the processor (3) of the device (1) executing steps 1)-10) described above and wherein the processor (3) furthermore generates the characteristic functions $f(t)$ and the reference characteristic functions $f_m(t)$ according to steps i)-iv) described in detail above.

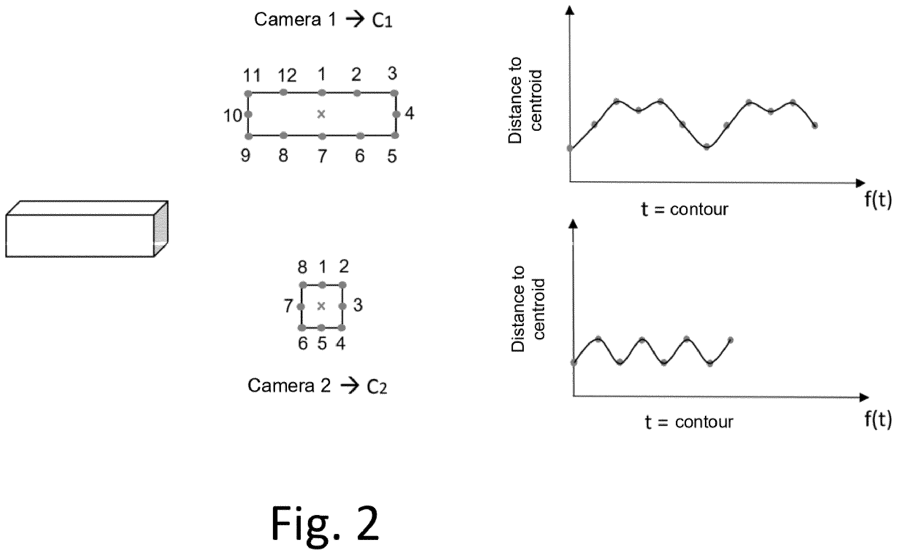

Figure 2 shows an example of the steps carried out by the processor (3) of the device (1) of the invention to obtain the characteristic functions $f(t)$ of a part (2) to be classified.

In this example, the part (2) is a rectangular prism and the device (1) comprises two cameras, $C_1$ and $C_2$, arranged on the same horizontal plane, but with a 90-degree angular difference between them.

The processor (3) activates the cameras (2) $C_1$ and $C_2$ so that each of them captures an image of the part (2). Then, the processor segments the images, distinguishing the part (2) from the background in each image. Based on this segmentation, the processor defines a characteristic function $f(t)$ for each of the images by carrying out the following steps:

c.1) establishing a closed path which delimits the contour of the part (2) in each of the segmented images;
c.2) determining a characteristic point of the closed path. In this case, the centroid of the inner area of the closed path shown in Figure 2 with an X;
c.3) selecting an initial point of the closed path, shown in Figure 2 with number 1;
c.4) parametrizing the closed path based on the selected initial point; and
c.5) defining the characteristic function $f(t)$ as the function which represents, for each parametrized point t of the closed path (points 1-12 for the image

of camera $C_1$ and points 1-8 for the image of camera $C_2$), the distance between point t and the centroid.

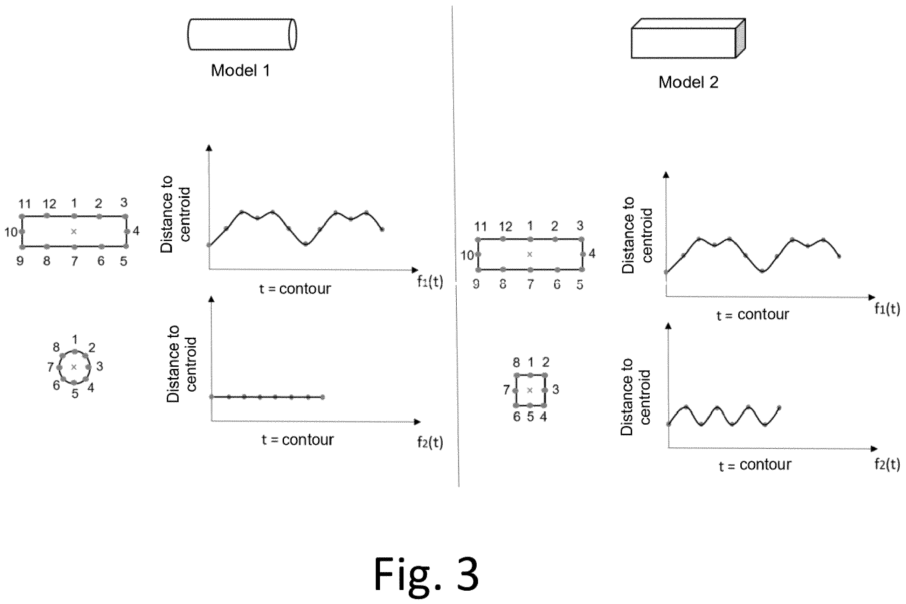

Figure 3 shows an example of the steps carried out by the processor (3) to generate the reference characteristic functions $f_m(t)$ of two part models with previously known shapes. In this example, the device (1) is the same as that of Figure 2.

In this case, the processor (3):

i. provides the representative models of the parts with known shapes;
ii. selects a set of orientation angles of the model;
iii. discretizes a domain formed by all the possible values of the angles selected in the preceding step and, for each point of the discretized domain, orients the part (2) of the model according to the discrete values of the angles corresponding to that point of the domain;
iv. generates an image of the model for each orientation established in the preceding step, the image being in accordance with the position and orientation of a camera $C_i$ considered as a reference camera;
v. segments the images in order to distinguish, in each image, the part (2) of the model from the background; and
vi. defines the characteristic functions $f_m(t)$ of the part (2) of the models for each of the segmented images following the same steps c.1)-c.5) described for generating the characteristic function in Figure 2.

In one embodiment, the selected angles are two angles different from one another and different from the angle of rotation about the optical axis of the camera.

Model 1 represents a part in the form of a cylinder and model 2 represents a part in the form of a rectangular prism.

In both cases, the reference characteristic functions $f_m(t)$ represent the distance between points of the closed paths and the corresponding centroid of the inner area of the closed path.

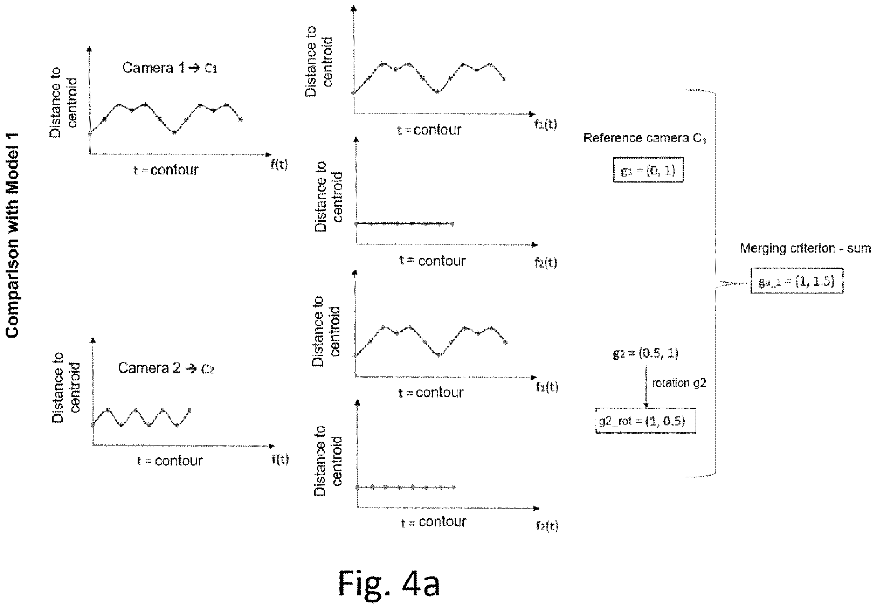

Figure 4a-4b show an example of the comparison of the characteristic functions $f(t)$ of the part (2) shown in Figure 2 and the reference characteristic functions $f_m(t)$ of the models shown in Figure 3, the comparison being carried out by the processor (3) of the device (1) described in Figures 2 and 3.

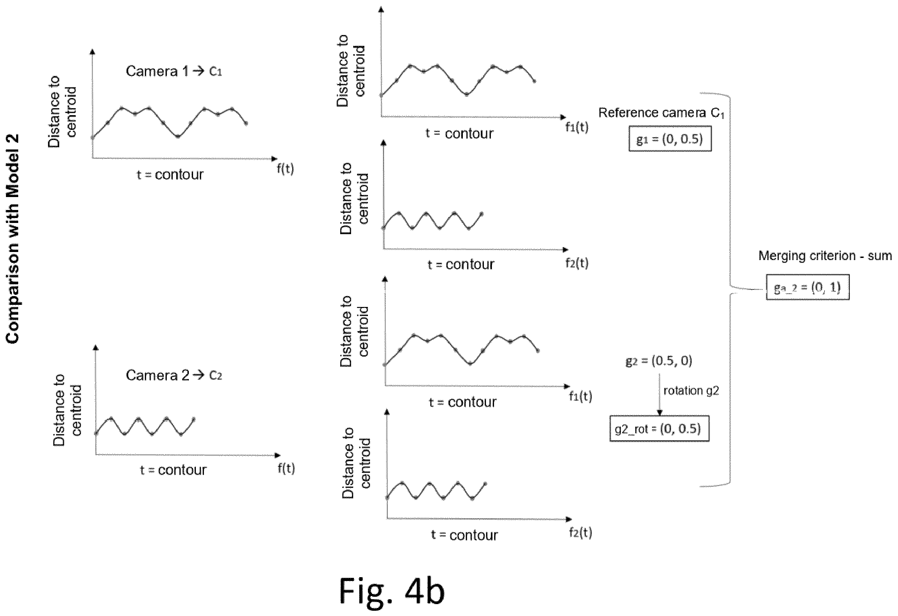

In particular, Figure 4a shows the comparison between the characteristic functions $f(t)$ of the part (2) and the reference characteristic functions $f_m(t)$ of model 1 and Figure 4b shows the comparison between the characteristic functions $f(t)$ of the part (2) and the reference characteristic functions $f_m(t)$ of model 2.

The processor (3) compares, for each previously segmented image, the characteristic function $f(t)$ with the reference characteristic functions $f_m(t)$ of the two representative models of the part (2) and determines a degree of proximity with each of such characteristic functions $f_m(t)$.

In the context of the invention, the greater the similarity between the characteristics of the part (2) to be classified and the characteristics of the parts of the models, the smaller the degree of proximity is in terms of measurement. Therefore, if the degree of proximity is zero, it means that the characteristic functions $f(t)$ and $f_m(t)$ that are being compared are the same and, therefore, the morphology of the part (2) is substantially the same as the morphology of the part of the model.

Based on the estimated degrees of proximity, the processor (3) generates, for each camera $C_1$ and $C_2$, a scalar function ($g_1$ and $g_2$), being defined as the degree of proximity between the characteristic function of the part (2) captured respectively by camera $C_1$ and camera $C_2$, and the plurality of reference characteristic functions $f_m(t)$.

For model 1, the processor (3) estimates that:

- The characteristic function $f(t)$ obtained from the segmented image acquired by camera $C_1$ is substantially the same as the reference characteristic function $f_1(t)$. Therefore, the degree of proximity is zero.
- The characteristic function $f(t)$ obtained from the segmented image acquired by camera $C_1$ is completely different from the reference characteristic function $f_2(t)$. Therefore, the degree of proximity is equal to one.
- The characteristic function $f(t)$ obtained from the segmented image acquired by camera $C_2$ exhibits certain similarity with the reference characteristic function $f_1(t)$. Therefore, the degree of proximity is equal to 0.5.
- The characteristic function $f(t)$ obtained from the segmented image acquired by camera $C_2$ is completely different from the reference characteristic function $f_2(t)$. Therefore, the degree of proximity is equal to one.

The scalar functions of model 1, $g_1$ and $g_2$, are therefore:

$$g_1 = (0, 1)$$

$$g_2 = (0.5, 1)$$

For model 2, the processor (3) estimates that:

- The characteristic function $f(t)$ obtained from the segmented image acquired by camera $C_1$ is substantially the same as the reference characteristic function $f_1(t)$. Therefore, the degree of proximity is zero.
- The characteristic function $f(t)$ obtained from the segmented image acquired by camera $C_1$ exhibits certain similarity with the reference characteristic

function $f_2(t)$. Therefore, the degree of proximity is equal to 0.5.

- The characteristic function $f(t)$ obtained from the segmented image acquired by camera $C_2$ exhibits certain similarity with the reference characteristic function $f_1(t)$. Therefore, the degree of proximity is equal to 0.5.

- The characteristic function $f(t)$ obtained from the segmented image acquired by camera $C_2$ is substantially the same as the reference characteristic function $f_2(t)$. Therefore, the degree of proximity is zero.

The scalar functions of model 2, $g_1$ and $g_2$, are therefore:

$$g_1 = (0, 0.5)$$

$$g_2 = (0.5, 0)$$

For each model, the processor (3) takes the scalar function $g_1$ associated with the camera $C_1$ as a reference and rotates the scalar function $g_2$ according to the orientation difference between cameras $C_1$ and $C_2$ (90 degrees). This rotation, in this particular example, consists of a shift of the elements of the scalar functions $g_2$. In this way, all the scalar functions are representing the degree of proximity with respect to one and the same angle reference.

The rotated scalar functions, $g_{2\_rot}$, for each model are:

*model 1:*

$$g_{2\_rot} = (1, 0.5)$$

*model 2:*

$$g_{2\_rot} = (0, 0.5)$$

Then, for each model, the processor (3) merges the scalar functions $g_1$ and $g_{2\_rot}$, obtaining a single scalar function $g_a$ by means of a pre-established merging criterion. In this case, for each value of the domain of the scalar function, the merged value is the sum of the values of each of the scalar functions $g_1$ and $g_{2\_rot}$.

The merged scalar functions of models 1 and 2, $g_{a_1}$ and $g_{a_2}$, are therefore:

$$g_{a_1} = (1, 1.5)$$

$$g_{a_2} = (0, 1)$$

In other embodiments:

- for each value of the domain of the scalar function, the merged value is the maximum value of all the scalar functions $g_j$, $j = 1, ..., n$;
- for each value of the domain of the scalar function, the merged value is the value of the norm of the set of $n$ values of the scalar functions $g_j$, $j = 1, ..., n$.

The processor (3) selects the model the scalar function $g_a$ of which exhibits the minimum degree of proximity from among all the degrees of proximity of the plurality of scalar functions $g_a$, in this case, model 2, since the merged scalar function $g_{a_2}$ exhibits the minimum value from between the two merged scalar functions of the two models of the example.

Finally, the processor (3) classifies the part (2) as corresponding to model 2 selected in the preceding step.

In one embodiment, the degree of proximity resulting from the comparison between two characteristic functions $(f(t), f_m(t + \varphi))$, wherein $\varphi$ is an offset value, is determined as the minimum distance between both functions, with $\varphi$ taking any offset value $\varphi$.

In one embodiment, the distance between two functions is determined as the norm of the difference of the two functions, for a pre-established norm.

In one embodiment, the processor (3) is further configured to determine the set of angles which determine the minimum of the scalar function $g_a$ of the selected model such that the orientation for which the scalar function is minimum is the orientation of the part (2).

In one embodiment, if the smallest degree of proximity is greater than a pre-established threshold value, then it is considered that the part (2) to be classified does not correspond to any model.

In another embodiment different from that shown in the preceding figures, the processor (3) defines the characteristic function $f(t)$ and/or the reference characteristic functions $f_m(t)$ by means of a neural network trained to extract information about textures, shadows, reflections or other sources of information about the segmented part (2) in the image, with $f(t)$ and/or $f_m(t)$ being at least one output of the neural network.

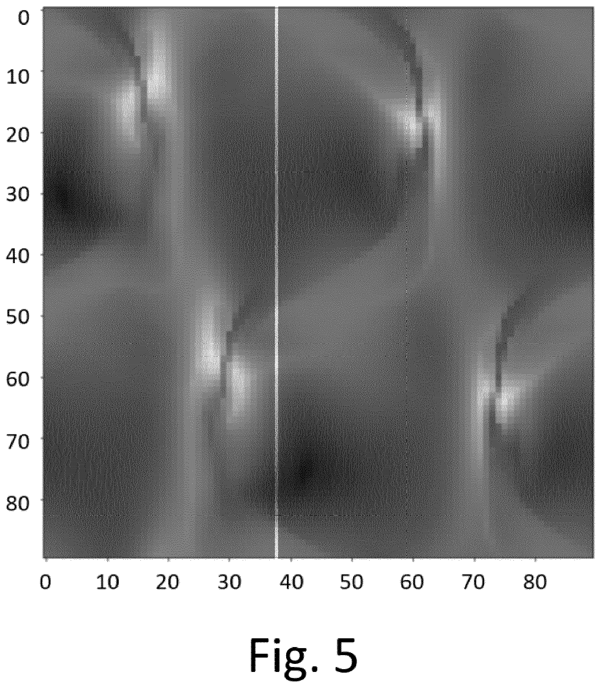

For the sake of simplicity, the device (1) comprising only two cameras located on one and the same horizontal plane is contemplated in the preceding examples, so the scalar functions $g_j$ which define the degrees of proximity are vectors. Figure 5 shows a more complex example of a two-dimensional scalar function $g_j$ in grayscale, wherein the distance between a characteristic function $f(t)$ and the plurality of reference characteristic functions $f_m(t)$ of a particular model is coded in colors ranging from black to white (with black being the minimum distance or minimum degree of proximity and white being the maximum distance or maximum degree of proximity). The axes represent the rotation of the part (2) to be classified with respect to a predefined position of the model being compared in the horizontal and vertical coordinate axes.

For each model, a two-dimensional scalar function $g_j$ in grayscale will be obtained for each characteristic function of the part (2) to be classified.

In one embodiment, the processor (3) is configured to rotate, in step f), the scalar functions $g_j$ by applying a transformation matrix on each of said scalar functions $g_j$, wherein each transformation matrix is defined by the positions and orientations of the reference camera $C_i$ and of the camera $C_j$.

In one embodiment, the processor (3) is configured to apply, in step f), a shift on each scalar function $g_j$ before or after applying the transformation matrix.

## Claims

1. Device (1) for classifying parts (2), comprising:

   - a plurality of cameras $C_j$, $j = 1, ..., n$, with n being the number of cameras, for capturing images, each of the cameras $C_j$ being configured to capture the part (2) to be classified; wherein the $n$ cameras are distributed in space with a different position and orientation,
   - a processor (3) configured to receive the images captured by the plurality of cameras $C_j$ and to process them;

   wherein the processor (3) is further configured to carry out the following steps:

   a) activating the plurality of cameras (2) with each camera $C_j$ capturing an image of the part (2) to be classified;
   b) segmenting the images in order to distinguish, in each image, the captured part (2) to be classified from the background;
   c) defining a characteristic function $f(t)$, with $t$ being a scalar parameter, of the captured part (2) for each of the segmented images;
   d) comparing, for each segmented image, the characteristic function $f(t)$ with a plurality of predefined reference characteristic functions $f_m(t)$ of a representative model of the part (2) to be classified, determining a degree of proximity with each of such characteristic functions $f_m(t)$;

   wherein the reference characteristic functions $f_m(t)$ are predefined according to the following steps:

   i. providing the representative model of the part (2) to be classified;
   ii. selecting a set of orientation angles of the model;
   iii. discretizing a domain formed by all the possible values of the angles selected in the preceding step and, for each point of the discretized domain, orienting the part (2) of the model according to the discrete values of the angles corresponding to that point of the domain;
   iv. generating an image of the model for each orientation established in the preceding step, the image being in accordance with the position and orientation of a camera $C_i$ considered as a reference camera, and executing, for each orientation, steps b) and c) to obtain the characteristic function $f_m(t)$;

   and wherein the processor (3) is further configured to:

   e) generate, for each camera $C_j$, $j = 1, ..., n$, a scalar function $g_j$ dependent on at least the angles selected in step ii), the scalar function $g_j$ being defined as the degree of proximity between the characteristic function $f_j(t)$ of the part (2) captured by the camera $C_j$ and the plurality of reference characteristic functions $f_m(t)$, the scalar function $g_j$ being determined in the predefined domain for each angle of the selected angles;
   f) take one of the scalar functions $g_i$, the one associated with a predetermined reference camera $C_i$, as a reference, and rotating the remaining scalar functions $g_j$, $i \neq j$, according to the orientation difference between the reference camera $C_i$ and the camera $C_j$ so that all the scalar functions are representing the degree of proximity with respect to one and the same angle reference;
   g) merge the $n$ scalar functions $g_j$ into a single scalar function $g_a$ by means of a pre-established merging criterion;
   h) repeat steps d)-g) for a plurality of representative models of the part (2) to be classified obtaining a plurality of scalar functions $g_a$;
   i) select the model the scalar function $g_a$ of which exhibits the minimum degree of proximity from among all the degrees of proximity of the plurality of scalar functions $g_a$; and
   j) classify the part (2) as corresponding to the model selected in the preceding step.

2. Device (1) according to the preceding claim, wherein the processor (3) is further configured to determine the set of angles which determine the minimum of the scalar function $g_a$ of the selected model such that the orientation for which the scalar function is minimum is the orientation of the part (2).

3. Device (1) according to any of the preceding claims, wherein if the smallest degree of proximity is greater than a pre-established threshold value, then it is considered that the part (2) to be classified does not correspond to any model.

4. Device (1) according to any of the preceding claims, wherein step c) of defining the characteristic function $f(t)$ and/or the reference characteristic functions $f_m(t)$ comprises the following sub-steps:

    c.1) establishing a closed path which delimits the contour of the part (2) in each of the segmented images;
    c.2) determining a characteristic point of the closed path, preferably the centroid of the inner area of the closed path;
    c.3) selecting an initial point of the closed path;
    c.4) parametrizing the closed path based on the selected initial point; and
    c.5) defining the characteristic function $f(t)$ or the reference characteristic function $f_m(t)$ as the function which represents, for each parametrized point $t$ of the closed path, the distance between point t and the characteristic point.

5. Device (1) according to any of claims 1-3, wherein step c) of defining the characteristic function $f(t)$ and/or the reference characteristic functions $f_m(t)$ is performed by means of a neural network trained to extract information about textures, shadows, reflections or other sources of information about the segmented part (2) in the image, and wherein $f(t)$ and/or $f_m(t)$ is at least one output of the neural network.

6. Device (1) according to any of the preceding claims, wherein the degree of proximity resulting from the comparison between two characteristic functions ($f(t), f_m(t + \varphi)$), wherein $\varphi$ is an offset value, is determined as the minimum distance between both functions, with $\varphi$ taking any offset value $\varphi$.

7. Device (1) according to the preceding claim, wherein the distance between two functions is determined as the norm of the difference of the two functions, for a pre-established norm.

8. Device (1) according to any of the preceding claims, wherein the selected angles are two angles different from one another and different from the angle of rotation about the optical axis of the camera.

9. Device (1) according to any of the preceding claims, wherein the representative model of the shape of the part (2) is:

    - either a numerical model and step iv), in which an image of the model is generated for each established orientation, is performed by means of rendering the numerical model oriented according to the established orientation,
    - or a physical part (2) and step iv), in which an image of the model is generated for each established orientation, is performed by capturing an image by means of a camera, wherein the part (2) has an orientation with respect to the camera according to the established orientation.

10. Device (1) according to any of the preceding claims, wherein the processor (3) is configured to rotate, in step f), the scalar functions $g_j$ by applying a transformation matrix on each of said scalar functions $g_j$, wherein each transformation matrix is defined by the positions and orientations of the reference camera $C_i$ and the camera $C_j$.

11. Device (1) according to the preceding claim, wherein the processor (3) is configured to apply, in step f), a shift on each scalar function $g_j$ before or after applying the transformation matrix.

12. Device (1) according to any of the preceding claims, wherein the $n$ cameras are distributed:

    - either in a spherical geometric location such that the optical axes of all the cameras are oriented towards an inner region of the sphere, the inner region being configured to house therein the part (2) to be classified and preferably comprising the center of the sphere;
    - or in a geometric location in the form of a barrel such that the optical axes of all the cameras are oriented towards an inner region of the barrel, the inner region of the barrel being configured to house therein the part (2) to be classified and preferably at least partially comprising an axis of the barrel, the axis of the barrel connecting the centers of the upper and lower bases thereof.

13. Device (1) according to any of the preceding claims, wherein the merging criterion is one selected from the following list:

    - for each value of the domain of the scalar function, the merged value is the maximum value of all the scalar functions $g_j$, $j = 1, ..., n$;
    - for each value of the domain of the scalar function, the merged value is the sum of the values of each of the scalar functions $g_j$, $j = 1, ... , n$;
    - for each value of the domain of the scalar function, the merged value is the value of the norm of the set of $n$ values of the scalar functions $g_j$, $j = 1, ..., n$.

14. Device (1) according to any of the preceding claims, further comprising means (4) for placing the part (2) to be classified in the inner region by means of either free fall or a launch.

15. Method for classifying parts (2) carried out by the device (1) according to claims 1-14, wherein the method comprises the processor (3) of the device (1) executing the following steps

1) activating the plurality of cameras (2) with each camera $C_j$ capturing an image of the part (2) to be classified;

2) segmenting the images in order to distinguish, in each image, the captured part (2) to be classified from the background;

3) defining a characteristic function $f(t)$, with $t$ being a scalar parameter, of the captured part (2) for each of the segmented images;

4) comparing, for each segmented image, the characteristic function $f(t)$ with a plurality of predefined reference characteristic functions $f_m(t)$ of a representative model of the part (2) to be classified, determining a degree of proximity with each of such characteristic functions $f_m(t)$; wherein the reference characteristic functions $f_m(t)$ are predefined according to the following steps carried out by the processor (3):

i. providing the representative model of the part (2) to be classified;

ii. selecting a set of orientation angles of the model;

iii. discretizing a domain formed by all the possible values of the angles selected in the preceding step and, for each point of the discretized domain, orienting the part (2) of the model according to the discrete values of the angles corresponding to that point of the domain;

iv. generating an image of the model for each orientation established in the preceding step, the image being in accordance with the position and orientation of a camera $C_i$ considered as a reference camera, and executing, for each orientation, steps 2) and 3) to obtain the characteristic function $f_m(t)$;

5) generating, for each camera $C_j$, $j = 1, ..., n$, a scalar function $g_j$ dependent on at least the angles selected in step ii), the scalar function $g_j$ being defined as the degree of proximity between the characteristic function $f_j(t)$ of the part (2) captured by the camera $C_j$ and the plurality of reference characteristic functions $f_m(t)$, the scalar function $g_j$ being determined in the predefined domain for each angle of the selected angles;

6) taking one of the scalar functions $g_i$, the one associated with a predetermined reference camera $C_i$, as a reference, and rotating the remaining scalar functions $g_j$, $i \neq j$, according to the orientation difference between the reference camera $C_i$ and the camera $C_j$ so that all the scalar functions are representing the degree of proximity with respect to one and the same angle reference;

7) merging the n scalar functions $g_j$ into a single scalar function $g_a$ by means of a pre-established merging criterion;

8) repeating steps 4)-7) for a plurality of representative models of the part (2) to be classified obtaining a plurality of scalar functions $g_a$;

9) selecting the model the scalar function $g_a$ of which exhibits the minimum degree of proximity from among all the degrees of proximity of the plurality of scalar functions $g_a$; and

10) classifying the part (2) as corresponding to the model selected in the preceding step.

**Patentansprüche**

1. Vorrichtung (1) zum Klassifizieren von Teilen (2), umfassend:

- eine Vielzahl von Kameras $C_j$, $j = 1, . . . , n$, wobei $n$ die Anzahl der Kameras ist, zum Erfassen von Bildern, wobei jede der Kameras $C_j$ dazu ausgebildet ist, das zu klassifizierende Teil (2) zu erfassen; wobei die $n$ Kameras im Raum mit unterschiedlicher Position und Orientierung verteilt sind,

- einen Prozessor (3), der dazu ausgebildet ist, die von der Vielzahl von Kameras $C_j$ erfassten Bilder zu empfangen und diese zu verarbeiten;

wobei der Prozessor (3) ferner dazu ausgebildet ist, die folgenden Schritte auszuführen:

a) Aktivieren der Vielzahl von Kameras (2), wobei jede Kamera $C_j$ ein Bild des zu klassifizierenden Teils (2) erfasst;

b) Segmentieren der Bilder, um in jedem Bild das erfasste zu klassifizierende Teil (2) vom Hintergrund zu unterscheiden;

c) Definieren einer charakteristischen Funktion $f(t)$, wobei $t$ ein skalarer Parameter, des erfassten Teils (2) für jedes der segmentierten Bilder ist;

d) Vergleichen, für jedes segmentierte Bild, der charakteristischen Funktion $f(t)$ mit einer Vielzahl von vorab definierten Referenz-Charakteristikfunktionen $f_m(t)$ eines repräsentativen Modells des zu klassifizierenden Teils (2), wobei ein Grad der Nähe zu jeder dieser charakteristischen Funktionen $f_m(t)$ bestimmt wird;

wobei die Referenz-Charakteristikfunktionen $f_m(t)$ gemäß den folgenden Schritten vorab definiert werden:

i. Bereitstellen des repräsentativen Modells des zu klassifizierenden Teils (2);

ii. Auswählen eines Satzes von Orientierungswinkeln des Modells;

iii. Diskretisieren eines Bereichs, der durch alle möglichen Werte der im vorhergehenden Schritt ausgewählten Winkel gebildet wird, und für jeden Punkt des diskretisierten Bereichs das Teil (2) des Modells gemäß den diskreten Werten der Winkel orientieren, die diesem Punkt des Bereichs entsprechen;

iv. Erzeugen eines Bildes des Modells für jede im vorhergehenden Schritt festgelegte Orientierung, wobei das Bild in Übereinstimmung mit der Position und Orientierung einer Kamera $C_i$, die als Referenzkamera betrachtet wird, ist, und Ausführen, für jede Orientierung, der Schritte b) und c), um die charakteristische Funktion $f_m(t)$ zu erhalten;

und wobei der Prozessor (3) ferner dazu ausgebildet ist:

e) für jede Kamera $C_j$, $j = 1, \ldots, n$, eine skalare Funktion $g_j$ zu erzeugen, die zumindest von den in Schritt ii) ausgewählten Winkeln abhängt, wobei die skalare Funktion $g_j$ als der Grad der Nähe zwischen der charakteristischen Funktion $f_j(t)$ des von der Kamera $C_j$ erfassten Teils (2) und der Vielzahl von Referenz-Charakteristikfunktionen $f_m(t)$ definiert ist, wobei die skalare Funktion $g_j$ in dem vorab definierten Bereich für jeden Winkel der ausgewählten Winkel bestimmt wird;

f) eine der skalaren Funktionen $g_i$, diejenige, die einer vorbestimmten Referenzkamera $C_i$ zugeordnet ist, als Referenz zu nehmen und die verbleibenden skalaren Funktionen $g_j$, $i \neq j$, gemäß der Orientierungsdifferenz zwischen der Referenzkamera $C_i$ und der Kamera $C_j$ zu drehen, so dass alle skalaren Funktionen den Grad der Nähe in Bezug auf ein und denselben Winkelbezug darstellen;

g) die n skalaren Funktionen $g_j$ in eine einzige skalare Funktion $g_a$ mittels eines vorab festgelegten Zusammenführkriteriums zusammenzuführen;

h) die Schritte d)-g) für eine Vielzahl von repräsentativen Modellen des zu klassifizierenden Teils (2) zu wiederholen, wobei eine Vielzahl von skalaren Funktionen $g_a$ erhalten wird;

i) das Modell auszuwählen, dessen skalare Funktion $g_a$ den minimalen Grad der Nähe unter allen Graden der Nähe der Vielzahl von skalaren Funktionen $g_a$ aufweist; und

j) das Teil (2) als entsprechend dem im vorhergehenden Schritt ausgewählten Modell zu klassifizieren.

2. Vorrichtung (1) nach dem vorhergehenden Anspruch, wobei der Prozessor (3) ferner dazu ausgebildet ist, den Satz von Winkeln zu bestimmen, die das Minimum der skalaren Funktion $g_a$ des ausgewählten Modells bestimmen, so dass die Orientierung, für die die skalare Funktion minimal ist, die Orientierung des Teils (2) ist.

3. Vorrichtung (1) nach einem der vorhergehenden Ansprüche, wobei, wenn der kleinste Grad der Nähe größer als ein vorab festgelegter Schwellenwert ist, dann angenommen wird, dass das zu klassifizierende Teil (2) keinem Modell entspricht.

4. Vorrichtung (1) nach einem der vorhergehenden Ansprüche, wobei Schritt c) des Definierens der charakteristischen Funktion $f(t)$ und/oder der Referenz-Charakteristikfunktionen $f_m(t)$ die folgenden Unterschritte umfasst:

c.1) Festlegen eines geschlossenen Pfads, der die Kontur des Teils (2) in jedem der segmentierten Bilder begrenzt;
c.2) Bestimmen eines charakteristischen Punkts des geschlossenen Pfads, vorzugsweise des Schwerpunkts der inneren Fläche des geschlossenen Pfads;
c.3) Auswählen eines Anfangspunkts des geschlossenen Pfads;
c.4) Parametrisieren des geschlossenen Pfads basierend auf dem ausgewählten Anfangspunkt; und
c.5) Definieren der charakteristischen Funktion $f(t)$ oder der Referenz-Charakteristikfunktion $f_m(t)$ als die Funktion, die für jeden parametrisierten Punkt $t$ des geschlossenen Pfads den Abstand zwischen dem Punkt $t$ und dem charakteristischen Punkt darstellt.

5. Vorrichtung (1) nach einem der Ansprüche 1-3, wobei Schritt c) des Definierens der charakteristischen Funktion $f(t)$ und/oder der Referenz-Charakteristikfunktionen $f_m(t)$ mittels eines neuronalen Netzwerks durchgeführt wird, das trainiert ist, Informationen über Texturen, Schatten, Reflexionen oder andere Informationsquellen über das segmentierte Teil (2) im Bild zu extrahieren, und wobei $f(t)$ und/oder $f_m(t)$ zumindest eine Ausgabe des neuronalen Netzwerks ist.

6. Vorrichtung (1) nach einem der vorhergehenden Ansprüche, wobei der Grad der Nähe, der aus dem Vergleich zwischen zwei charakteristischen Funktionen $(f(t), f_m(t + \varphi))$ resultiert, wobei $\varphi$ ein Offset-Wert ist, als der minimale Abstand zwischen beiden Funktionen bestimmt wird, wobei $\varphi$ einen beliebigen Offset-Wert $\varphi$ annimmt.

**7.** Vorrichtung (1) nach dem vorhergehenden Anspruch, wobei der Abstand zwischen zwei Funktionen als die Norm der Differenz der beiden Funktionen für eine vorab festgelegte Norm bestimmt wird.

**8.** Vorrichtung (1) nach einem der vorhergehenden Ansprüche, wobei die ausgewählten Winkel zwei Winkel sind, die voneinander verschieden sind und verschieden von dem Winkel der Rotation um die optische Achse der Kamera sind.

**9.** Vorrichtung (1) nach einem der vorhergehenden Ansprüche, wobei das repräsentative Modell der Form des Teils (2) ist:

- entweder ein numerisches Modell, und Schritt iv), in dem ein Bild des Modells für jede festgelegte Orientierung erzeugt wird, wird mittels Rendern des numerischen Modells durchgeführt, das gemäß der festgelegten Orientierung orientiert ist,
- oder ein physisches Teil (2), und Schritt iv), in dem ein Bild des Modells für jede festgelegte Orientierung erzeugt wird, wird durch Erfassen eines Bildes mittels einer Kamera durchgeführt, wobei das Teil (2) eine Orientierung relativ zur Kamera gemäß der festgelegten Orientierung hat.

**10.** Vorrichtung (1) nach einem der vorhergehenden Ansprüche, wobei der Prozessor (3) dazu ausgebildet ist, in Schritt f) die skalaren Funktionen $g_j$ zu drehen, indem auf jede dieser skalaren Funktionen $g_j$ eine Transformationsmatrix angewandt wird, wobei jede Transformationsmatrix durch die Positionen und Orientierungen der Referenzkamera $C_i$ und der Kamera $C_j$ definiert ist.

**11.** Vorrichtung (1) nach dem vorhergehenden Anspruch, wobei der Prozessor (3) dazu ausgebildet ist, in Schritt f) eine Verschiebung auf jede skalare Funktion $g_j$ vor oder nach Anwenden der Transformationsmatrix anzuwenden.

**12.** Vorrichtung (1) nach einem der vorhergehenden Ansprüche, wobei die n Kameras verteilt sind:

- entweder an einer kugelförmigen geometrischen Position, so dass die optischen Achsen aller Kameras auf eine innere Region der Kugel ausgerichtet sind, wobei die innere Region dazu ausgebildet ist, darin das zu klassifizierende Teil (2) aufzunehmen und das vorzugsweise das Zentrum der Kugel umfasst;
- oder an einer geometrischen Position in Form eines Fasses, so dass die optischen Achsen aller Kameras auf eine innere Region des Fasses ausgerichtet sind, wobei die innere Region des Fasses dazu ausgebildet ist, darin das zu klassifizierende Teil (2) aufzunehmen und das vorzugsweise zumindest teilweise eine Achse des Fasses umfasst, wobei die Achse des Fasses die Mittelpunkte seiner oberen und unteren Grundflächen verbindet.

**13.** Vorrichtung (1) nach einem der vorhergehenden Ansprüche, wobei das Zusammenführkriterium eines ist, das aus der folgenden Liste ausgewählt ist:

- für jeden Wert des Bereichs der skalaren Funktion ist der zusammengeführte Wert der Maximalwert aller skalaren Funktionen $g_j$, $j = 1,...,n$;
- für jeden Wert des Bereichs der skalaren Funktion ist der zusammengeführte Wert die Summe der Werte jeder der skalaren Funktionen $g_j$, $j = 1, . . . , n$;
- für jeden Wert des Bereichs der skalaren Funktion ist der zusammengeführte Wert der Wert der Norm der Menge von n Werten der skalaren Funktionen $g_j$, $j = 1, . . . , n$.

**14.** Vorrichtung (1) nach einem der vorhergehenden Ansprüche, ferner umfassend Mittel (4) zum Platzieren des zu klassifizierenden Teils (2) in der inneren Region mittels entweder freien Falls oder eines Auswurfs.

**15.** Verfahren zum Klassifizieren von Teilen (2), durchgeführt durch die Vorrichtung (1) nach den Ansprüchen 1-14, wobei das Verfahren umfasst, dass der Prozessor (3) der Vorrichtung (1) die folgenden Schritte ausführt:

1) Aktivieren der Vielzahl von Kameras (2), wobei jede Kamera $C_j$ ein Bild des zu klassifizierenden Teils (2) erfasst;
2) Segmentieren der Bilder, um in jedem Bild das erfasste zu klassifizierende Teil (2) vom Hintergrund zu unterscheiden;
3) Definieren einer charakteristischen Funktion $f$ ($t$), wobei $t$ ein skalarer Parameter, des erfassten Teils (2) für jedes der segmentierten Bilder ist;
4) Vergleichen, für jedes segmentierte Bild, der charakteristischen Funktion $f(t)$ mit einer Vielzahl von vorab definierten Referenz-Charakteristikfunktionen $f_m(t)$ eines repräsentativen Modells des zu klassifizierenden Teils (2), wobei ein Grad der Nähe zu jeder dieser charakteristischen Funktionen $f_m(t)$ bestimmt wird;
wobei die Referenz-Charakteristikfunktionen $f_m(t)$ gemäß den folgenden, durch den Prozessor (3) durchgeführten Schritten vorab definiert werden:

i. Bereitstellen des repräsentativen Modells des zu klassifizierenden Teils (2);

ii. Auswählen eines Satzes von Orientierungswinkeln des Modells;

iii. Diskretisieren eines Bereichs, der durch alle möglichen Werte der im vorhergehenden Schritt ausgewählten Winkel gebildet wird, und für jeden Punkt des diskretisierten Bereichs das Teil (2) des Modells gemäß den diskreten Werten der Winkel orientieren, die diesem Punkt des Bereichs entsprechen;

iv. Erzeugen eines Bildes des Modells für jede im vorhergehenden Schritt festgelegte Orientierung, wobei das Bild in Übereinstimmung mit der Position und Orientierung einer Kamera $C_i$, die als Referenzkamera betrachtet wird, ist, und Ausführen, für jede Orientierung, der Schritte 2) und 3), um die charakteristische Funktion $f_m(t)$ zu erhalten;

5) Erzeugen, für jede Kamera $C_j$, $j = 1, \ldots, n$, einer skalaren Funktion $g_j$, die zumindest von den in Schritt ii) ausgewählten Winkeln abhängt, wobei die skalare Funktion $g_j$ als der Grad der Nähe zwischen der charakteristischen Funktion $f_j(t)$ des von der Kamera $C_j$ erfassten Teils (2) und der Vielzahl von Referenz-Charakteristikfunktionen $f_m(t)$ definiert ist, wobei die skalare Funktion $g_j$ in dem vorab definierten Bereich für jeden Winkel der ausgewählten Winkel bestimmt wird;

6) Nehmen einer der skalaren Funktionen $g_i$, diejenige, die einer vorbestimmten Referenzkamera $C_i$ zugeordnet ist, als Referenz, und Drehen der verbleibenden skalaren Funktionen $g_j$, $i \neq j$, gemäß der Orientierungsdifferenz zwischen der Referenzkamera $C_i$ und der Kamera $C_j$, so dass alle skalaren Funktionen den Grad der Nähe in Bezug auf ein und denselben Winkelbezug darstellen;

7) Zusammenführen der $n$ skalaren Funktionen $g_j$ in eine einzige skalare Funktion $g_a$ mittels eines vorab festgelegten Zusammenführkriteriums;

8) Wiederholen der Schritte 4)-7) für eine Vielzahl von repräsentativen Modellen des zu klassifizierenden Teils (2), wobei eine Vielzahl von skalaren Funktionen $g_a$ erhalten wird;

9) Auswählen des Modells, dessen skalare Funktion $g_a$ den minimalen Grad der Nähe unter allen Graden der Nähe der Vielzahl von skalaren Funktionen $g_a$ aufweist; und

10) Klassifizieren des Teils (2) als entsprechend dem im vorhergehenden Schritt ausgewählten Modell.

## Revendications

1. Dispositif (1) pour classifier des pièces (2), comprenant :

   - une pluralité de caméras $C_j$, $j = 1, \ldots, n$, $n$ étant le nombre de caméras, pour capturer des images, chacune des caméras $C_j$ étant configurée pour capturer la pièce (2) à classifier ; dans lequel les n caméras sont réparties dans l'espace avec des positions et orientations différentes ;
   - un processeur (3) configuré pour recevoir les images capturées par la pluralité de caméras $C_j$ et pour les traiter ;

   dans lequel le processeur (3) est en outre configuré pour exécuter les étapes suivantes :

   a) activer la pluralité de caméras (2), chaque caméra $C_j$ capturant une image de la pièce (2) à classifier ;
   b) segmenter les images afin de distinguer, dans chaque image, la pièce (2) capturée à classifier de l'arrière-plan ;
   c) définir une fonction caractéristique $f(t)$, $t$ étant un paramètre scalaire, de la pièce (2) capturée pour chacune des images segmentées ;
   d) comparer, pour chaque image segmentée, la fonction caractéristique $f(t)$ avec une pluralité de fonctions caractéristiques de référence prédéfinies $f_m(t)$ d'un modèle représentatif de la pièce (2) à classifier, en déterminant un degré de proximité avec chacune desdites fonctions caractéristiques $f_m(t)$ ;

   dans lequel les fonctions caractéristiques de référence $f_m(t)$ sont prédéfinies selon les étapes suivantes :

   i. fournir le modèle représentatif de la pièce (2) à classifier ;
   ii. sélectionner un ensemble d'angles d'orientation du modèle ;
   iii. discrétiser un domaine formé par toutes les valeurs possibles des angles sélectionnés à l'étape précédente et, pour chaque point du domaine discrétisé, orienter la pièce (2) du modèle selon les valeurs discrètes des angles correspondant audit point du domaine ;
   iv. générer une image du modèle pour chaque orientation établie à l'étape précédente, l'image étant conforme à la position et à l'orientation d'une caméra $C_i$ considérée comme caméra de référence, et exécuter, pour chaque orientation, les étapes b) et c) afin d'obtenir la fonction caractéristique $f_m(t)$ ;

et dans lequel le processeur (3) est en outre configuré pour :

e) générer, pour chaque caméra $C_j$, $j$ = 1, . . . , $n$, une fonction scalaire $g_j$ dépendant au moins des angles sélectionnés à l'étape ii), la fonction scalaire $g_j$ étant définie comme le degré de proximité entre la fonction caractéristique $f_j(t)$ de la pièce (2) capturée par la caméra $C_j$ et la pluralité de fonctions caractéristiques de référence $f_m(t)$, la fonction scalaire $g_j$ étant déterminée dans le domaine prédéfini pour chaque angle des angles sélectionnés ;

f) prendre l'une des fonctions scalaires $g_i$, celle associée à une caméra de référence prédéterminée $C_i$, comme référence, et faire tourner les fonctions scalaires restantes $g_j$, $i \neq j$, selon la différence d'orientation entre la caméra de référence $C_i$ et la caméra $C_j$ de sorte que toutes les fonctions scalaires représentent le degré de proximité par rapport à une seule et même référence angulaire ;

g) fusionner les n fonctions scalaires $g_j$ en une seule fonction scalaire $g_a$ au moyen d'un critère de fusion préétabli ;

h) répéter les étapes d)-g) pour une pluralité de modèles représentatifs de la pièce (2) à classifier en obtenant une pluralité de fonctions scalaires $g_a$ ;

i) sélectionner le modèle dont la fonction scalaire $g_a$ présente le degré de proximité minimal parmi tous les degrés de proximité de la pluralité de fonctions scalaires $g_a$ ; et

j) classifier la pièce (2) comme correspondant au modèle sélectionné à l'étape précédente.

2. Dispositif (1) selon la revendication précédente, dans lequel le processeur (3) est en outre configuré pour déterminer l'ensemble des angles qui déterminent le minimum de la fonction scalaire $g_a$ du modèle sélectionné, de sorte que l'orientation pour laquelle la fonction scalaire est minimale corresponde à l'orientation de la pièce (2).

3. Dispositif (1) selon l'une quelconque des revendications précédentes, dans lequel, si le plus petit degré de proximité est supérieur à une valeur seuil préétablie, il est alors considéré que la pièce (2) à classifier ne correspond à aucun modèle.

4. Dispositif (1) selon l'une quelconque des revendications précédentes, dans lequel l'étape c) de définition de la fonction caractéristique $f(t)$ et/ou des fonctions caractéristiques de référence $f_m(t)$ comprend les sous-étapes suivantes :

c.1) établir un chemin fermé délimitant le contour de la pièce (2) dans chacune des images segmentées ;

c.2) déterminer un point caractéristique du chemin fermé, de préférence le centroïde de la surface intérieure du chemin fermé ;

c.3) sélectionner un point initial du chemin fermé ;

c.4) paramétrer le chemin fermé sur la base du point initial sélectionné ; et

c.5) définir la fonction caractéristique $f(t)$ ou la fonction caractéristique de référence $f_m(t)$ comme la fonction représentant, pour chaque point paramétré $t$ du chemin fermé, la distance entre le point $t$ et le point caractéristique.

5. Dispositif (1) selon l'une quelconque des revendications 1-3, dans lequel l'étape c) de définition de la fonction caractéristique $f(t)$ et/ou des fonctions caractéristiques de référence $f_m(t)$ est réalisée au moyen d'un réseau neuronal entraîné pour extraire des informations relatives aux textures, ombres, réflexions ou autres sources d'information concernant la pièce (2) segmentée dans l'image, et dans lequel $f(t)$ et/ou $f_m(t)$ constitue au moins une sortie du réseau neuronal.

6. Dispositif (1) selon l'une quelconque des revendications précédentes, dans lequel le degré de proximité résultant de la comparaison entre deux fonctions caractéristiques ($f(t)$, $f_m(t + \varphi)$), $\varphi$ étant une valeur de décalage, est déterminé comme la distance minimale entre les deux fonctions, $\varphi$ prenant toute valeur de décalage $\varphi$ possible.

7. Dispositif (1) selon la revendication précédente, dans lequel la distance entre deux fonctions est déterminée comme la norme de la différence des deux fonctions, pour une norme préétablie.

8. Dispositif (1) selon l'une quelconque des revendications précédentes, dans lequel les angles sélectionnés sont deux angles différents l'un de l'autre et différents de l'angle de rotation autour de l'axe optique de la caméra.

9. Dispositif (1) selon l'une quelconque des revendications précédentes, dans lequel le modèle représentatif de la forme de la pièce (2) est :

- soit un modèle numérique et l'étape iv), dans lequel une image du modèle est générée pour chaque orientation, est réalisée par rendu du modèle numérique orienté selon l'orientation établie ;
- soit une pièce physique (2) et l'étape iv), dans lequel une image du modèle est générée pour chaque orientation, est réalisée par capture d'une image au moyen d'une caméra, la pièce (2) ayant une orientation par rapport à la caméra selon l'orientation établie.

**10.** Dispositif (1) selon l'une quelconque des revendications précédentes, dans lequel le processeur (3) est configuré pour faire tourner, à l'étape f), les fonctions scalaires $g_j$ en appliquant une matrice de transformation à chacune desdites fonctions scalaires $g_j$, chaque matrice de transformation étant définie par les positions et orientations de la caméra de référence $C_i$ et de la caméra $C_j$.

**11.** Dispositif (1) selon la revendication précédente, dans lequel le processeur (3) est configuré pour appliquer, à l'étape f), un décalage à chaque fonction scalaire $g_j$ avant ou après application de la matrice de transformation.

**12.** Dispositif (1) selon l'une quelconque des revendications précédentes, dans lequel les n caméras sont réparties :

- soit selon une disposition géométrique sphérique telle que les axes optiques de toutes les caméras soient orientés vers une région intérieure de la sphère, ladite région intérieure étant configurée pour loger la pièce (2) à classifier et comprenant de préférence le centre de la sphère ;
- soit selon une disposition géométrique en forme de barillet telle que les axes optiques de toutes les caméras soient orientés vers une région intérieure du barillet, ladite région intérieure étant configurée pour loger la pièce (2) à classifier et comprenant de préférence au moins partiellement un axe du barillet, l'axe du barillet reliant les centres de ses bases supérieure et inférieure.

**13.** Dispositif (1) selon l'une quelconque des revendications précédentes, dans lequel le critère de fusion est sélectionné dans la liste suivante :

- pour chaque valeur du domaine de la fonction scalaire, la valeur fusionnée est la valeur maximale de toutes les fonctions scalaires $g_j$, $j = 1,...,n$ ;
- pour chaque valeur du domaine de la fonction scalaire, la valeur fusionnée est la somme des valeurs de chacune des fonctions scalaires $g_j$, $j = 1, . . . , n$ ;
- pour chaque valeur du domaine de la fonction scalaire, la valeur fusionnée est la norme de l'ensemble des n valeurs des fonctions scalaires $g_j$, $j = 1, . . . ,n$.

**14.** Dispositif (1) selon l'une quelconque des revendications précédentes, comprenant en outre des moyens (4) pour placer la pièce (2) à classifier dans la région intérieure au moyen soit d'une chute libre soit d'un lancement.

**15.** Procédé pour classifier des pièces (2) mis en œuvre par le dispositif (1) selon les revendications 1-14, dans lequel le procédé comprend l'exécution, par le processeur (3) du dispositif (1), des étapes suivantes :

1) activer la pluralité de caméras (2), chaque caméra $C_j$ capturant une image de la pièce (2) à classifier ;
2) segmenter les images afin de distinguer, dans chaque image, la pièce (2) capturée à classifier de l'arrière-plan ;
3) définir une fonction caractéristique $f(t)$, $t$ étant un paramètre scalaire, de la pièce (2) capturée pour chacune des images segmentées ;
4) comparer, pour chaque image segmentée, la fonction caractéristique $f(t)$ avec une pluralité de fonctions caractéristiques de référence prédéfinies $f_m(t)$ d'un modèle représentatif de la pièce (2) à classifier, en déterminant un degré de proximité avec chacune desdites fonctions caractéristiques $f_m(t)$ ;
dans lequel les fonctions caractéristiques de référence $f_m(t)$ sont prédéfinies selon les étapes suivantes mises en œuvre par le processeur (3) :

i. fournir le modèle représentatif de la pièce (2) à classifier ;
ii. sélectionner un ensemble d'angles d'orientation du modèle ;
iii. discrétiser un domaine formé par toutes les valeurs possibles des angles sélectionnés à l'étape précédente et, pour chaque point du domaine discrétisé, orienter la pièce (2) du modèle selon les valeurs discrètes des angles correspondant audit point du domaine ;
iv. générer une image du modèle pour chaque orientation établie à l'étape précédente, l'image étant conforme à la position et à l'orientation d'une caméra $C_i$ considérée comme caméra de référence, et exécuter, pour chaque orientation, les étapes 2) et 3) afin d'obtenir la fonction caractéristique $f_m(t)$ ;

5) générer, pour chaque caméra $C_j$, $j = 1, . . . , n$, une fonction scalaire $g_j$ dépendant au moins des angles sélectionnés à l'étape ii), la fonction scalaire $g_j$ étant définie comme le degré de proximité entre la fonction caractéristique $f_j(t)$ de la pièce (2) capturée par la caméra $C_j$ et la pluralité de fonctions caractéristiques de référence $f_m(t)$, la fonction scalaire $g_j$ étant déterminée dans le domaine prédéfini pour chaque angle des angles sélectionnés ;

6) prendre l'une des fonctions scalaires $g_i$, celle associée à une caméra de référence prédéterminée $C_i$ comme référence, et faire tourner les fonctions scalaires restantes $g_j$, $i \neq j$, selon la différence d'orientation entre la caméra de référence $C_i$ et la caméra $C_j$ de sorte que toutes les fonctions scalaires représentent le degré de proximité par rapport à une seule et même référence angulaire ;

7) fusionner les n fonctions scalaires $g_j$ en une seule fonction scalaire $g_a$ au moyen d'un critère de fusion préétabli ;

8) répéter les étapes 4)-7) pour une pluralité de modèles représentatifs de la pièce (2) à classifier en obtenant une pluralité de fonctions scalaires $g_a$ ;

9) sélectionner le modèle dont la fonction scalaire $g_a$ présente le degré de proximité minimal parmi tous les degrés de proximité de la pluralité de fonctions scalaires $g_a$ ; et

10) classifier la pièce (2) comme correspondant au modèle sélectionné à l'étape précédente.

Fig. 1a

# Fig. 1b

Fig. 2

Fig. 3

Fig. 4a

Fig. 4b

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021334948 A1
- US 20211028 A1
- EP 2511653 A
- EP 3418675 A